# EUROPÄISCHE PATENTSCHRIFT

(11) **EP 2 196 416 B1**
(45) Veröffentlichungstag und Bekanntmachung des Hinweises auf die Patenterteilung: **19.03.2014**
(21) Anmeldenummer: 09013325.7
(22) Anmeldetag: 22.10.2009
(51) Int. Cl.: B65G 21/20

(54) **Verfahren zum Transportieren eines Werkstücks durch eine Bearbeitungs-station einer Werkstückbearbeitungsvorrichtung und Werkstückbearbeitungsvorrichtung**
Method for transporting a workpiece through a processing station of a workpiece processing device and workpiece processing device
Procédé de transport d'une pièce usinée à travers une station de traitement d'un dispositif de traitement de pièces usinées et dispositif de traitement de pièces usinées

(30) Priorität: 25.11.2008 DE 102008059177
(43) Veröffentlichungstag der Anmeldung: 16.06.2010
(73) Patentinhaber: Karl Heesemann Maschinenfabrik GmbH & Co. KG, 32547 Bad Oeynhausen (DE)
(72) Erfinder: Heesemann, Jürgen, 32547 Bad Oeynhausen (DE)
(74) Vertreter: Lins, Edgar

(56) Entgegenhaltungen:
- WO-A1-00/61478
- GB-A- 2 212 127

## Beschreibung

Die Erfindung betrifft ein Verfahren zum Transportieren eines Werkstücks durch eine Bearbeitungsstation einer Werkstückbearbeitungsvorrichtung gemäß dem Oberbegriff des Anspruchs 1.

Die Erfindung betrifft ferner eine Werkstückbearbeitungsvorrichtung mit einem das Werkstück durch eine Bearbeitungsstation transportierenden Transportband, gemäß dem Oberbegriff des Anspruchs 4.

Zum Transport von Werkstücken durch eine Bearbeitungsstation einer sogenannten Durchlaufmaschine ist es wichtig, dass während der Bearbeitung des Werkstücks dieses verschiebungssicher auf dem Transportband gehalten wird. Zur Festlegung des Werkstücks auf dem Transportband hat es sich bewährt, das Transportband mit Durchgangslöchern zu versehen und durch die Durchgangslöcher Luft mittels eines Ventilators abzusaugen, sodass das Werkstück durch den durch das Absaugen entstehenden Unterdruck an dem Transportband gehalten wird. Die vom Ventilator abgesaugte Luft wird regelmäßig durch eine druckseitige Leitung in eine Abluftanlage geleitet, da die abgesaugte Luft häufig Stäube und andere Verunreinigungen enthält, weswegen die Abluft vor dem Ablassen in die Umwelt gefiltert werden muss. Dies ist insbesondere bei einer schleifenden und spanenden Bearbeitung für Werkstücke, insbesondere Holzwerkstücke, der Fall. Die erfindungsgemäße Werkstückbearbeitungsvorrichtung ist daher insbesondere eine Holzbearbeitungsvorrichtung und spezieller eine Schleifmaschine für Holzwerkstücke.

Der die Luft absaugende und den Unterdruck generierende Ventilator ist zweckmäßigerweise ein Ventilator, der mit einer konstanten Drehzahl umläuft, sodass er einen gewissen maximalen Unterdruck generiert. Ein derartiger Ventilator wird zweckmäßigerweise mit einem Asynchron-Motor betrieben. Möglich ist ferner der Betrieb des Ventilators mit einem in seiner Drehzahl geregelten Motor. Der Ausdruck "konstante Drehzahl" schließt dabei eine Variation der Drehzahl in einem gewissen Bereich nicht aus, bringt jedoch zum Ausdruck, dass eine Reduzierung des Volumenstroms nicht, wie etwa bei einem Nebenschlussmotor, zu einem Hochdrehen des Motors führt.

Für den Transport der Werkstücke entsteht bei den bekannten Werkstückbearbeitungsvorrichtungen kein Problem, wenn ein Werkstück nach dem anderen durch die Bearbeitungsstation transportiert wird. Dies ist in der Praxis aber häufig nicht der Fall. Somit entstehen Zeiträume, in denen die Werkstückbearbeitungsvorrichtung leer läuft, jedoch nicht abgestellt wird, da das Wiederanlaufen der Werkstückbearbeitungsvorrichtung einen längeren Zeitraum in Anspruch nimmt und darüber hinaus einen hohen Energieeinsatz erfordert, sodass das Abstellen nicht zu einer Reduktion des Energiebedarfs führt.

In den Leerlaufzeiten der Werkstückbearbeitungsvorrichtung, in denen kein Werkstück durch die Bearbeitungsstation transportiert wird, arbeitet der Ventilator, der den Unterdruck für das Transportband ("Saugspannanlage") produziert, mit einem maximalen Strom, da für die Erzielung des erreichbaren Unterdrucks ein maximaler Volumenstrom fließt. Die Leistung des Ventilators ist proportional dem Volumenstrom und dem Unterdruck (P = p x V). Der Leerlauf führt somit zu einer maximalen Leistungsaufnahme des Ventilators. Wenn sich dagegen Werkstücke auf dem Transportband befinden, wird die Situation günstiger, da die Werkstücke einen Teil der Durchgangsöffnungen (Saugöffnungen) des Transportbands verschließen, wodurch der Volumenstrom reduziert wird.

Bekannte Saugspannanlagen dieser Art weisen noch eine Regelung des Unterdrucks auf. Hierzu ist in der druckseitigen Leitung im Anschluss an den Ventilator eine Drosselklappe angebracht, mit der der durch den Ventilator hindurch tretende Volumenstrom geregelt werden kann. Hierfür findet eine Messung des Unterdrucks in einem unterhalb des Transportbands befindlichen Saugkasten statt. Ist ein Soll-Unterdruck erreicht, wird die Drosselklappe in der druckseitigen Leitung entsprechend eingestellt, um den Unterdruck im Betrieb der Anlage konstant zu halten. An dem Problem der hohen Leistungsaufnahme des Ventilators im Leerlauf aufgrund des maximalen Volumenstroms ändert sich hierdurch nichts.

Es könnte erwogen werden, den Ventilator in den Leerlaufzeiten abzuschalten. Dies wäre jedoch nachteilig, da der Ventilator beim Anlaufen sowohl Luft transportiert und Unterdruck erzeugen muss und zusätzlich noch die Schwungmasse des Ventilators beschleunigen muss. Für diesen Arbeitszustand spricht man von einem sogenannten Schwerstanlauf, bei dem der Antriebsmotor des Ventilators über einen langen Zeitraum eine hohe Stromaufnahme hat.

Aus der GB 2 212 127 A ist eine Vorrichtung zum Handhaben von leichten Objekten, wie beispielsweise Chipstüten bekannt. Bei dieser Vorrichtung werden die Objekte durch Unterdruck angesaugt, um sie nach oben an einen Transportband zu ziehen.

Das Dokument WO 00 61478 A offenbart ein Verfahren zum Transportieren eines Werkstücks gemäß dem Oberbegriff des Anspruchs 1, sowie ein Werkstückbearbeitungsvorrichtung gemäß dem Oberbegriff des Anspruchs 4.

Der vorliegenden Erfindung liegt die Aufgabe zugrunde, eine Werkstückbearbeitungsvorrichtung so zu steuern, dass in Leerlaufphasen ein geringer Energieverbrauch durch die Unterdruckerzeugung am Transportband entsteht und hohe Anlaufströme für den den Unterdruck generierenden Ventilator vermieden werden.

Zur Lösung dieser Aufgabe wird die im Verfahrensanspruch 1 angegebene Merkmalskombination vorgeschlagen.

Zur Lösung der Aufgabe wird ferner die im Werkstückbearbeitungsvorrichtung 4 angegebene Merkmalskombination vorgeschlagen.

In einer bevorzugten Ausführungsform der Erfindung ist an den Ventilator eine druckseitige Leitung angeschlossen, in der der Volumenstrom geregelt wird. In den Leerlaufzeiten, in denen kein auf dem Transportband zu haltendes Werkstück detektiert worden ist, wird der Volumenstrom auf Null geregelt. In diesem Fall nimmt der Ventilator nur noch eine minimale Leistung auf. Wenn durch die Sensoreinrichtung hingegen ein neues Werkstück detektiert wird, kann die druckseitige Leitung schlagartig vollständig geöffnet werden, sodass der benötigte Unterdruck durch den Ventilator ohne Anlaufprobleme mit einer sehr kurzen Hochlaufzeit generiert wird und die Werkstückbearbeitungsvorrichtung sofort wieder arbeitsfähig ist. Die Regelung des Volumenstroms kann vorzugsweise druckseitig von dem Ventilator erfolgen, weil auf der Druckseite des Ventilators regelmäßig ein ausreichender Platz für die Volumenstromregelungseinrichtung zur Verfügung steht. Die erfindungsgemäße Funktion der Volumenstromregelung in den Leerlaufzeiten ist jedoch in gleicher Weise mit einer Volumenstromregelung auf der Saugseite des erfindungsgemäß eingesetzten Ventilators realisierbar.

Die Erfindung bietet den Vorteil, dass durch die Herunterregelung des Volumenstroms bis auf Null das flexible Transportband durch den Volumenstrom nicht mehr auf eine bei flexiblen Transportbändern notwendigerweise vorhandene Tischunterlage gezogen wird, sodass auch der Antrieb des Transportbandes gegen einen geringeren Widerstand erfolgt und daher nur eine verringerte Energieaufnahme erfordert.

Die Erfindung soll im Folgenden anhand eines in der Zeichnung dargestellten Ausführungsbeispiels näher erläutert werden. Es zeigen:
- Figur 1: ein Ausführungsbeispiel einer erfindungsgemäßen Vorrichtung im Leerlauf, jedoch beim Einlaufen eines Werkstücks;
- Figur 2: die Vorrichtung gemäß Figur 1, bei der das Werkstück sich in einer Bearbeitungsstation befindet;
- Figur 3: die Vorrichtung gemäß Figur 1, bei der das Werkstück abtransportiert und kein neues Werkstück detektiert worden ist.

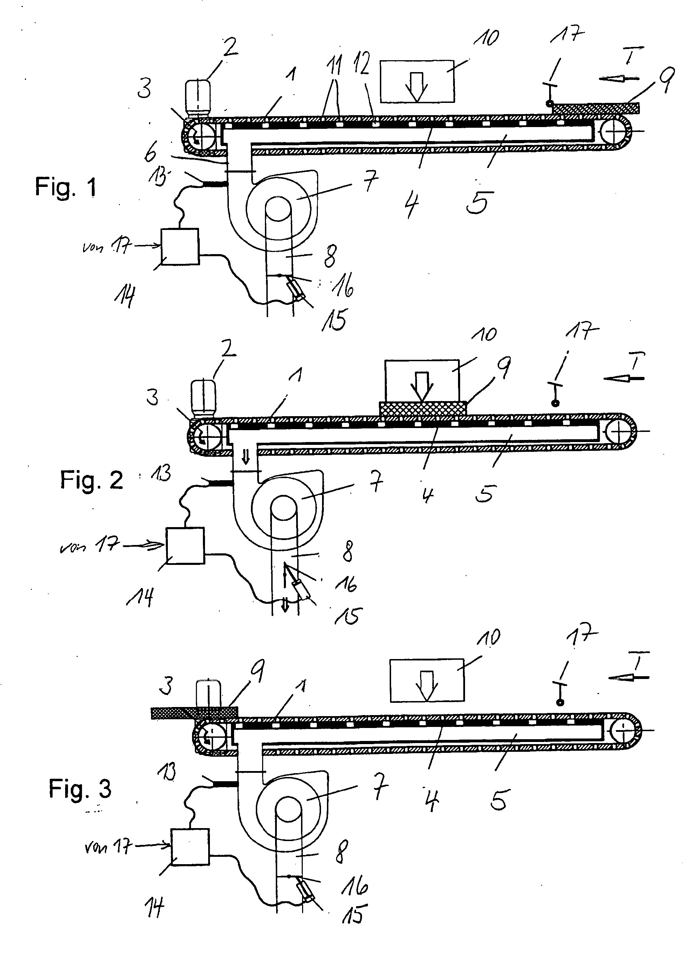

Figur 1 zeigt schematisch eine Werkstückbearbeitungsvorrichtung mit einem umlaufenden Transportband 1, das mittels einer von einem Motor 2 getriebenen Antriebsrolle 3 umlaufend angetrieben wird. Der Obertrum des flexiblen Transportbands 1 stützt sich auf einem Transporttisch 4 ab, unter dem ein Saugkasten 5 angeordnet ist. Der zu den Seiten und auch unten luftdicht abgeschlossene Saugkasten 5 ist über einen Anschlussstutzen 6 mit einem Ventilator 7 verbunden, der Luft aus dem Saugkasten 5 heraussaugt und über eine druckseitige Leitung 8 abtransportiert, beispielsweise zu einem (nicht dargestellten) Filter.

Die Luftabsaugung aus dem Saugkasten 5 hat den Zweck, ein auf dem Transportband 1 transportiertes Werkstück 9 an das Transportband 1 anzusaugen, sodass es verschiebesicher auf dem Transportband 1 gelagert ist, wenn das Werkstück 9 im Durchlauf unter einer Bearbeitungsstation 10, beispielsweise einer Schleifeinrichtung, hindurchtransportiert wird. Damit das Ansaugen gelingt, muss das Transportband 1 luftdurchlässig sein, was beispielsweise dadurch gelingt, dass in das Transportband eine Vielzahl von Durchgangslöchern 11 eingebracht sind. Zu dem gleichen Zweck weist auch der Transporttisch 4 zahlreiche Durchgangslöcher 12 auf, sodass eine luftabsaugende Verbindung zwischen dem saugenden Ventilator 7 und der Oberfläche des Transportbands 1 hergestellt ist.

Die Werkstückbearbeitungsvorrichtung ist ferner in dem dargestellten Ausführungsbeispiel mit einem Unterdrucksensor 13 versehen, dessen Ausgangssignal auf eine Steuerungseinrichtung 14 gelangt. Die Steuerungseinrichtung 14 steuert in Abhängigkeit von dem durch den Unterdrucksensor 13 gemessenen Unterdruck in dem Saugkasten 5 einen Stellzylinder 15, der auf eine Volumenstromregeleinrichtung 16 in Form einer Drosselklappe einwirkt, die in die druckseitige Leitung 8 eingesetzt ist. Durch die Regelung des Volumenstroms kann der in dem Saugkasten 5 bzw. auf der Saugseite des Ventilators 7 auftretende Unterdruck geregelt werden.

Die erfindungsgemäße Werkstücksbearbeitungsvorrichtung ist ferner mit einer Sensoreinrichtung 17 versehen, die am Einlauf der Werkstückbearbeitungsvorrichtung detektiert, ob ein Werkstück 9 in Richtung der Bearbeitungsstation 10 mittels des Transportbandes 1 gefördert wird, um damit beispielsweise die Funktion der Bearbeitungsstation 10 zu steuern. Beispielsweise kann bei einer Durchlaufschleifmaschine mit einem Gliederdruckbalken aufgrund der Sensoreinrichtung 17, die aus einer Mehrzahl von senkrecht zur Transportrichtung (Pfeil T in der Zeichnung) nebeneinander angeordneten Sensoren besteht, der zu einem oder mehreren bestimmten Sensoren gehörende Druckschuh des Gliederdruckbalkens abgesenkt werden, um so ein über den Druckschuhen geführtes Schleifband im Bereich des Werkstücks 9 wirksam zu schalten.

Zur Realisierung der vorliegenden Erfindung wird in dem dargestellten Ausführungsbeispiel das Ausgangssignal der Sensoreinrichtung 17 auf die Steuerungseinrichtung 14 geleitet, die dann, wenn kein Werkstück 9 detektiert worden ist, die Volumenstromregelungseinrichtung 16 so steuert, dass der Volumenstrom der druckseitigen Leitung 8 praktisch vollständig gestoppt wird, wie dies in Figur 1 durch die vollständig geschlossene Drosselklappe dargestellt ist. Durch das in Figur 1 gerade einlaufende Werkstück 9 detektiert die Sensoreinrichtung 17 nunmehr ein einlaufende Werkstück, das vom Transportband 1 gehalten werden muss. Demgemäß wird die Volumenstromregelungseinrichtung 16 durch die Steuerungseinrichtung 17 mittels des Stellzylinders 15 in eine den Volumenstrom in der druckseitigen Leitung freigebende Stellung geschwenkt durch die der Unterdruck mittels des Ventilators 7 in dem Saugkasten 5 erzeugt wird. Dadurch wird das Werkstück 9 auf dem Transportband 1 fixiert, wenn es unter der Bearbeitungsstation 10 hindurchtransportiert wird.

Nachdem das Werkstück 9 die Bearbeitungsstation 10 durchlaufen und kein neues Werkstück 9 die Sensoreinrichtung 17 am Einlauf des Transportbands 1 passiert hat, steuert die Steuerungseinrichtung 14 die Volumenstromregelungseinrichtung 16 wieder in die geschlossene Stellung, in der der Volumenstrom in der druckseitigen Leitung 8 vermindert oder vollständig unterbunden wird.

Der Ventilator 7 ist mit einem Motor angetrieben, dessen Leistungsaufnahme dem Volumenstrom und dem Unterdruck (P = p x V, wobei P die elektrische Leistung, p den Unterdruck und V den Volumenstrom darstellt) entspricht. Die Drehzahl des Motors bleibt dabei konstant, wobei sich die Leistungsaufnahme proportional zum geförderten Volumenstrom einstellt. Dies wird erfindungsgemäß ausgenutzt, um durch die einfache Beeinflussung der Volumenstromregelungseinrichtung in Abhängigkeit von der von der Sensoreinrichtung 17 detektierten Existenz (bzw. Nicht-Existenz) eines einlaufenden Werkstücks im Leerlaufbetrieb die Leistungsaufnahme für den Ventilator 7 erheblich zu drosseln, ohne diesen Ventilator 7 abzustellen, wodurch die oben beschriebene Probleme der hohen Stromaufnahme und der Zeitverzögerung beim Anlauf des Ventilators 7 entstehen würden. Diese Probleme werden durch die erfindungsgemäße Steuerung des Leerlaufbetriebs vermieden.

## Patentansprüche

1. Verfahren zum Transportieren eines Werkstücks (9) durch eine Bearbeitungsstation (10) einer Werkstückbearbeitungsvorrichtung, bei dem das Werkstück (9) bei der spanenden Bearbeitung mittels Unterdruck verschiebungssicher auf ein mit Durchgangslöchern (11) versehenes Transportband (1) mittels eines Ventilators (7),
gesaugt wird und
die angesaugte Luft als Volumenstrom abgeleitet wird und
das Vorhandensein eines Werkstücks (9) auf dem Transportband (1) mittels einer Sensoreinrichtung (17) erkannt wird,
**dadurch gekennzeichnet, dass** die Leistungsaufnahme des Ventilators proportional zum geförderten Volumenstrom ist und der Ventilator (7) mit einer konstanten Drehzahl umläuft, und dass
im Betrieb der Vorrichtung der durch den Ventilator (7) transportierte Volumenstrom heruntergeregelt wird, wenn mit der Sensoreinrichtung (17) kein auf dem Transportband (1) zu haltendes Werkstück (9) detektiert wird, sodass der nicht abgeschaltete Ventilator (7) mit einer verringerten Leistungsaufnahme durchläuft.

2. Verfahren nach Anspruch 1, **dadurch gekennzeichnet, dass** der Volumenstrom durch den Ventilator (7) auf Null gesteuert wird, wenn kein auf dem Transportband (1) zu haltendes Werkstück (9) detektiert worden ist.

3. Verfahren nach Anspruch 1 oder 2, **dadurch gekennzeichnet, dass** die vom Ventilator (7) angesaugte Luft durch eine druckseitige Leitung (8) abtransportiert wird und dass die Steuerung des Volumenstroms in der druckseitigen Leitung (8) vorgenommen wird.

4. Werkstückbearbeitungsvorrichtung mit einem das Werkstück (9) durch eine Bearbeitungsstation (10) transportierenden Transportband (1) das mit Durchgangslöchern (11) versehen ist und an seiner dem Werkstück (9) abgewandten Seite einen Unterdruckraum (5) aufweist, aus dem ein Ventilator (7), der Luft absaugt und die Vorrichtung zur Detektion eines auf dem Transportband (1) vorhandenen Werkstücks (9) eine Sensoreinrichtung (17) aufweist, deren Ausgang mit einer Steuerungseinrichtung (14) verbunden ist, **dadurch gekennzeichnet, dass** die Leistungsaufnahme des Ventilators proportional zum geförderten Volumenstrom ist und der Ventilator (7) mit einer konstanten Drehzahl umläuft, dass eine Volumenstromregelungseinrichtung (16) vorgesehen ist und dass die Steuerungseinrichtung (14) die Volumenstromregelungseinrichtung (16) in Verschließrichtung steuert, wenn von der Sensoreinrichtung (17) kein Werkstück auf dem Transportband (1) detektiert worden ist.

5. Werkstückbearbeitungsvorrichtung nach Anspruch 4, **dadurch gekennzeichnet, dass** der Volumenstrom durch die Volumenstromregelungseinrichtung (16) vollständig unterdrückt wird, wenn kein Werkstück (9) auf dem Transportband (1) detektiert worden ist.

6. Werkstückbearbeitungsvorrichtung nach Anspruch 4 oder 5, **dadurch gekennzeichnet, dass** an dem Ventilator (7) eine druckseitige Leitung (8) angeschlossen ist und dass die Volumenstromregelungseinrichtung (16) in der druckseitigen Leitung (8) angeordnet ist.

## Claims

1. A method for transporting a workpiece (9) through the processing station (10) of a workpiece processing device, in which, during machining, the workpiece (9) is sucked onto the conveyor belt (1), which is equipped with throughholes (11), so that the workpiece (9) is shift-secure, the workpiece being sucked onto the conveyor belt (1) by means of a fan (7), whose power input is proportional to the required volumetric flow and which rotates with a constant number of revolutions, and
the air that has been sucked in is channelled away as volumetric flow, and the presence of a workpiece (9) on the conveyor belt (1) is recognised by means of a sensor device (17),
**characterised by** the fact that
during the operation of the device, the rate of volumetric flow moved by the fan (7) is down-regulated if the sensor facility (17) does not detect a workpiece (9) stationed on the conveyor belt (1), such that the fan (7) continues running with a reduced power input and is not switched off.

2. The method according to claim 1, **characterised by** the fact that the volumetric flow is reduced towards zero by the fan (7), if no work piece (9) is detected on the conveyor belt (1).

3. The method according to claims 1 or 2, **characterised by** the fact that the air sucked in by the fan (7) is removed through a discharge pipe (8), and that the controlling of the volumetric flow is carried out in the discharge pipe (8).

4. A workpiece processing device with a conveyor belt (1) which transports the work piece (9) through a processing station (10), and which is equipped with throughholes (11), and which features a vacuum area (5) on the side facing away from the workpiece (9), from which a fan (7), whose power input is proportional to the required volumetric flow and which rotates with a constant number of revolutions, sucks air away, wherein the workpiece processing device includes a volumetric flow controlling device (16), and wherein the device for the detection of a workpiece (9) present on the conveyor belt (1) features a sensor device (17), whose outlet is connected to a controlling device (14), **characterised by** the fact that the controlling device (14) actuates the volumetric flow controlling device (16) in a decreasing direction if the sensor device (17) does not detect a workpiece on the conveyor belt (1).

5. The workpiece processing device according to claim 4, **characterised by** the fact that the volumetric flow is completely suppressed by the volumetric flow regulation device (16) if no workpiece (9) is detected on the conveyor belt (1).

6. The workpiece processing device according to claims 4 or 5, **characterised by** the fact that a discharge pipe (8) is attached to the fan (7), and that the volumetric flow regulation device (16) is set up in the discharge pipe (8).

## Revendications

1. Procédé pour transporter une pièce à oeuvrer (9) à travers une station d'usinage (10) d'un dispositif d'usinage pour pièces à oeuvrer, dans lequel la pièce à oeuvrer (9) est aspirée, pendant l'usinage avec enlèvement de matière, au moyen d'une dépression et de manière assurée à l'encontre d'un déplacement sur une bande de transport (1) dotée de trous traversants (11) au moyen d'un ventilateur (7) et
l'air aspiré est dérivé sous forme de courant volumétrique et
la présence d'une pièce à oeuvrer (9) sur la bande de transport (1) est reconnue au moyen d'un dispositif à capteur (17),
**caractérisé en ce que** la puissance absorbée par le ventilateur est proportionnelle au courant volumétrique refoulé et le ventilateur tourne avec une vitesse de rotation constante, et **en ce que**, lors du fonctionnement du dispositif, le courant volumétrique transporté par le ventilateur (7) est régulé en diminution lorsqu'on ne détecte au moyen du dispositif à capteur (17) aucune pièce à oeuvrer (9) à maintenir sur la bande de transport (1), de sorte que le ventilateur (7) qui n'est pas arrêté tourne en absorbant une puissance réduite.

2. Procédé selon la revendication 1, **caractérisé en ce que** le courant volumétrique qui traverse le ventilateur (7) est commandé à une valeur nulle lorsqu'on ne détecte aucune pièce à oeuvrer (9) à maintenir sur la bande de transport (1).

3. Procédé selon la revendication 1 ou 2, **caractérisé en ce que** l'air aspiré par le ventilateur (7) est évacué par un conduit (8) côté pression, et **en ce que** la commande du courant volumétrique est effectuée dans le conduit (8) côté pression.

4. Dispositif d'usinage pour pièces à oeuvrer comprenant une bande de transport (1) qui transporte la pièce à oeuvrer (9) à travers une station d'usinage (10), qui est dotée de trous traversants (11) et qui présente sur son côté détourné de la pièce à oeuvrer (9) une chambre en dépression (5) hors de laquelle un ventilateur (7) aspire de l'air, et pour la détection d'une pièce à oeuvrer (9) présente sur la bande de transport (1) le dispositif comprend un dispositif à capteur (17) dont la sortie est connectée à un dispositif de commande (14), **caractérisé en ce que** la puissance absorbée par le ventilateur est proportionnelle au courant volumétrique refoulé et le ventilateur tourne avec une vitesse de rotation constante, **en ce qu'**il est prévu un moyen de régulation (16) du courant volumétrique, et **en ce que** le dispositif de commande (14) commande le dispositif de régulation (16) du courant volumétrique en direction de la fermeture lorsque le dispositif à capteur (17) ne détecte aucune pièce à oeuvrer sur la bande de transport.

5. Dispositif d'usinage pour pièces à oeuvrer selon la revendication 4, **caractérisé en ce que** le courant volumétrique à travers le dispositif de régulation (15) du courant volumétrique est totalement supprimé lorsqu'aucune pièce à oeuvrer (9) n'est détectée sur la bande de transport (1).

6. Dispositif d'usinage pour pièces à oeuvrer selon la revendication 4 ou 5, **caractérisé en ce qu'**un conduit côté pression (8) est raccordé au ventilateur (7), et **en ce que** le dispositif de régulation (16) du courant volumétrique est agencé dans le conduit côté pression (8).
